# EUROPÄISCHE PATENTSCHRIFT

(11) **EP 0 501 147 B1**
(45) Veröffentlichungstag und Bekanntmachung des Hinweises auf die Patenterteilung: **05.10.1994**
(21) Anmeldenummer: 92101301.7
(22) Anmeldetag: 28.01.1992
(51) Int. Cl.: B29C 47/22, B29C 47/16

(54) **Strangpresswerkzeug für das Strangpressen von thermoplastifiziertem Kunststoff**
Extrusion tool for the extrusion of thermoplastic material
Outil d'extrusion pour l'extrusion de matière plastique

(30) Priorität: 01.03.1991 DE 4106487
(43) Veröffentlichungstag der Anmeldung: 02.09.1992
(73) Patentinhaber: Reifenhäuser GmbH & Co., Maschinenfabrik, 53844 Troisdorf (DE)
(72) Erfinder: Reifenhäuser, Hans, W-5210 Troisdorf 15 (DE)
(74) Vertreter: Andrejewski, Walter

(56) Entgegenhaltungen:
- EP-A- 0 367 022
- DE-A- 1 218 702
- GB-A- 2 237 236
- US-A- 3 564 653
- US-A- 4 522 678
- PATENT ABSTRACTS OF JAPAN vol. 4, no. 12 (C-71) 29. Januar 1980 & JP-A-54 146 859 ( MITSUBISHI JUKOGYO K.K. ) 16. November 1979

## Beschreibung

Die Erfindung betrifft ein Strangpreßwerkzeug für das Strangpressen von thermoplastifiziertem Kunststoff, - mit zumindest einem Austrittsspalt in einem Werkzeugkörper, der eine spaltregulierende Werkzeuglippe und eine spaltbegrenzende Gegenlippe aufweist, wobei die spaltregulierende Werkzeuglippe an zumindest eine axialverstellbare Stellstange angeschlossen ist, welche einer Steuer- und Regeleinrichtung für die Spaltweite und damit für die Dicke des stranggepreßten Kunststoffes angehört wobei die Steuer- und Regeleinrichtung einen umdrehungswinkelsteuerbaren Stellmotor aufweist, der mit einem Untersetzungsgetriebe ausgerüstet ist. - Bekanntlich kommt es bei solchen Strangpreßwerkzeugen darauf an, da die Spaltweite sehr genau einstellbar und mit engen Toleranzen una geringer Stell- bzw. Totzeit steuerbar bzw. regelbar ist. Insoweit steigen die Anforderungen an die Genauigkeit mit der Entwicklung der Kunststofftechnik. Bei dem Strangpreßwerkzeug, von dem die Erfindung ausgeht (JP-A 54 146 859) ist die Stellstange als Stellschraube ausgebildet, die axial verschieblich am Werkzeugkörper gelagert ist und in einer Gewindebohrung der spaltregulierenden Werkzeuglippe eindrehbar ist. Zwischen der Stellschraube und dem Ausgang des mit dem Stellmotor verbundenen Untersetzungsgetriebes befindet sich eine druckluftbetätigbare Kupplung. Damit ist lediglich eine Grobeinstellung der Werkzeuglippe möglich, weil Toleranzen und Reibungseinflüsse eine Feineinstellung verhindern.

Bei einem anderen Strangpreßwerkzeug (US 29 38 231), ist die Stellstange ein besonderer Metallbolzen, dessen Kopf ein Gewinde trägt und in eine entsprechende Bohrung des Werkzeugkörpers eingeschraubt ist, dessen Schaft jedoch durch Ohmsche Wärme eines geeigneten Heizelementes erwärmbar ist. Seine Wärmedehnung bestimmt den Stellweg der so aufgebauten Stellstange, welche der Steuer- und/oder Regeleinrichtung angehört, die insoweit eine Feinsteuerung oder Feinregelung bewirkt. Die Grobeinstellung erfolgt einerseits durch das Einschrauben des mit einem Gewinde versehenen Kopfes in die zugeordnete Bohrung und kann nicht toleranzfrei erfolgen. Die Grobeinstellung erfolgt andererseits auch durch Verstellen der Gegenlippe. Die Grobeinstellung und die Feineinstellung sind auf diese Weise gekoppelt. Die Toleranzen der Grobeinstellung beeinflussen die Genauigkeit der Feineinstellung. Das Heizelement gehört der Steuer- und Regeleinrichtung an. Es erlaubt es, den Bolzenschaft auf eine einstellbare Temperatur in einem vorgegebenen Temperaturbereich einzustellen und auf dieser zu halten, bis die Steuerung oder Regelung einen anderen Stellweg und damit eine andere Temperatur des Bolzenschaftes verlangt. Das ist aus mehreren Gründen der Kritik offen. Einerseits erfolgt die Temperaturerhöhung des Bolzenschaftes aus physikalischen Gründen nur langsam, so daß für die Steuerung bzw. Regelung erhebliche Stellzeiten bzw. Totzeiten mit ihren bekannten Nachteilen in Kauf genommen werden müssen, andererseits beeinträchtigen unvermeidbare Temperaturinhomogenitäten des Bolzenschaftes die Genauigkeit der Steuerung oder Regelung, zumal sich das Werkzeug insgesamt erwärmt, woraus steuerungstechnisch bzw. regeltechnisch unangenehme Kopplungen resultieren. Mit demgegenüber hoher Genauigkeit und kleinen Stellzeiten bzw. Totzeiten arbeitet eine andere bekannte Ausführungsform (DE 34 27 912), bei der als Stellelement ein Feldtranslator verwendet wird. Feldtranslatoren bezeichnet Piezotranslatoren und Magnetostriktionstranslatoren. Hier handelt es sich um elektrisch ansteuerbare Stellglieder, die den piezoelektrischen bzw. magnetostriktiven Effekt ausnutzen. Diese Ausführungsform hat sich sehr bewährt, jedoch können beim Einsatz von Feldtranslatoren sehr große Stellkräfte nicht aufgebracht werden.

Der Erfindung liegt die Aufgabe zugrunde, ein Strangpreßwerkzeug des eingangs beschriebenen Aufbaus so weiter auszubilden, daß bei hohen Anforderungen an die Genauigkeit bei kleinen Stellzeiten bzw. Totzeiten im Bedarfsfall mit sehr großen Stellkräften die Einstellung der Spaltweite erfolgen kann.

Zur Lösung dieser Aufgabe lehrt die Erfindung, daß das Untersetzungsgetriebe über einen Treiber auf die Stellstange arbeitet. - Die Erfindung beruht auf die Erkenntnis, daß bei einem Aggregat aus Stellmotor, Untersetzungsgetriebe und Treiber die Übersetzungsverhältnisse und der Treiber ohne Schwierigkeiten so eingerichtet werden können, daß bei hohen Stellkräften eine sehr genaue Einstellung mit geringer Stellzeit bzw. Totzeit möglichen ist. Stellkräfte von 10 000 N und mehr lassen sich unschwer verwirklichen.

Im einzelnen bestehen im Rahmen der Erfindung mehrere Möglichkeiten der weiteren Ausbildung und Gestaltung. So ist eine bevorzugte Ausführungsform der Erfindung dadurch gekennzeichnet, daß das Aggregat aus Stellmotor, Untersetzungsgetriebe und Treiber als einheitliches Bauteil ausgeführt sowie im Bereich der Stellstange in eine Bauteilaufnahme in dem Strangpreßwerkzeug eingesetzt ist und in dieser durch zumindest eine Justierschraube justierbar ist. Der Stellmotor kann als Schrittmotor ausgeführt sein. Der Treiber ist nach bevorzugter Ausführungsform der Erfindung als Exzentertrieb ausgebildet. Im Rahmen der Erfindung liegt es jedoch auch, den Treiber als Linearkurventreiber auszuführen. Es versteht sich, daß die Stellstange über eine Rückstellfeder den Treiber beaufschlagt. In diesem Zusammenhang ist eine bevorzugte Ausführungsform der Erfindung dadurch gekennzeichnet, daß die spaltregulierende Werkzeuglippe zugleich als Rückstellfeder eingesetzt ist. Die Gegenlippe kann ihrerseits an eine Grobeinstelleinrichtung angeschlossen sein, wobei im einfachsten Fall für die Grobeinstellung mit einfachen Präzisionsschrauben gearbeitet werden kann.

Im Rahmen der Erfindung können die spaltregulierende Werkzeuglippe und die Gegenlippe einer Breitschlitzdüse angehören. Die spaltregulierende Werkzeuglippe und die Gegenlippe können aber auch einem Folienblaskopf angehören.

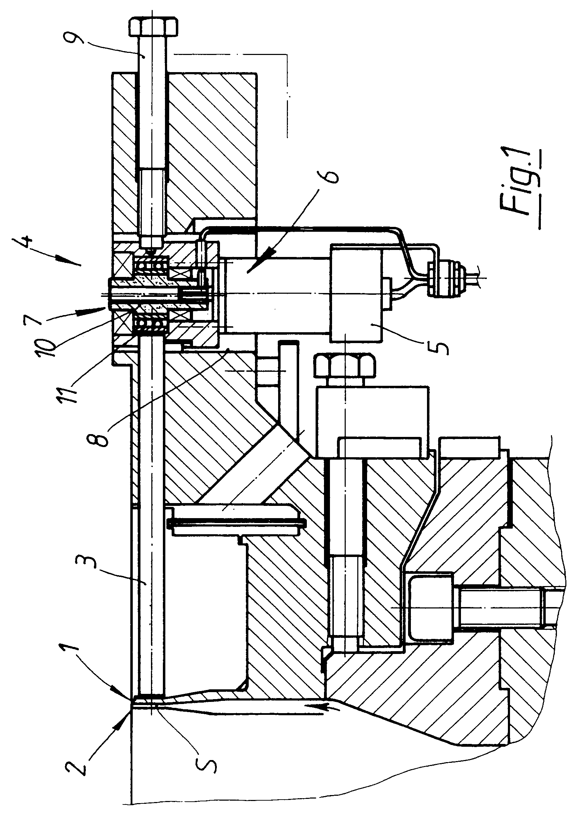

Im folgenden wird die Erfindung anhand einer lediglich ein Ausführungsbeispiel darstellenden Zeichnung ausführlicher erläutert. Es zeigen in schematischer Darstellung
- Fig. 1: einen Vertikalschnitt durch ein erfindungsgemäßes Strangpreßwerkzeug,
- Fig. 2: in gegenüber der Fig. 1 wesentlich vergrößertem Maßstab einen Ausschnitt aus dem Gegenstand nach Fig. 1.

Das in den Figuren dargestellte Strangpreßwerkzeug ist für das Strangpressen von thermoplastifiziertem Kunststoff bestimmt. Es weist zumindest einen Austrittsspalt S in einem Werkzeugkörper auf, der eine spaltregulierende Werkzeuglippe 1 und eine spaltbegrenzende Gegenlippe 2 besitzt. Die spaltregulierende Werkzeuglippe 1 ist an zumindest eine axialverstellbare Stellstange 3 angeschlossen. Die Stellstange 3 gehört einer Steuer- und Regeleinrichtung 4 für die Spaltweite und damit für die Dicke des stranggepreßten Kunststoffes an.

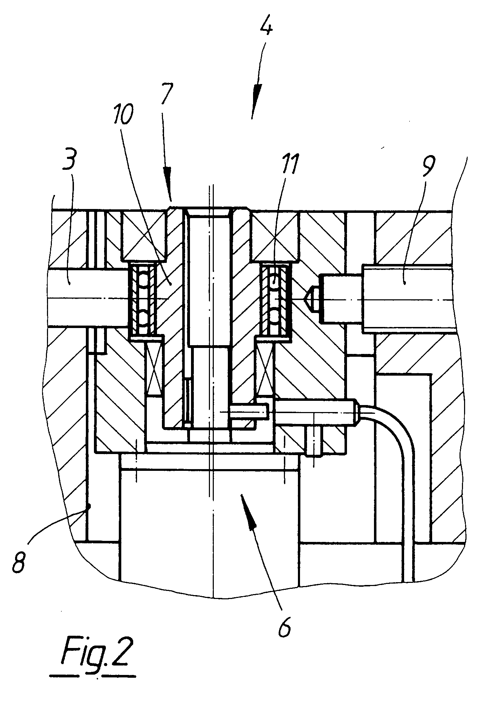

Insbesondere aus der Fig. 2 entnimmt man, daß die Steuer- und Regeleinrichtung 4 einen umdrehungswinkelsteuerbaren Stellmotor 5 aufweist, der mit einem Untersetzungsgetriebe 6 ausgerüstet ist. Das Untersetzungsgetriebe 6 arbeitet über einen Treiber 7 auf die Stellstange 3. Das Aggregat aus Stellmotor 5, Untersetzungsgetriebe 6 und Treiber 7 ist als ein einheitliches Bauteil ausgeführt sowie im Bereich der Stellstange 3 in eine Bauteilaufnahme 8 in dem Strangpreßwerkzeug eingesetzt. In dieser ist es durch zumindest eine Justierschraube 9 justierbar. Bei dem Stellmotor 5 mag es sich um einen Schrittmotor handeln. Der Treiber 7 ist im Ausführungsbeispiel als Exzentertrieb ausgebildet. In der Fig. 2 erkennt man, daß der Exzentertrieb eine Exzenterscheibe 10 aufweist, auf die ein Wälzlager 11 aufgesetzt ist. Foglich wird die Betätigung der Stellstange 3 durch Reibung mit dem als Exzentertrieb ausgebildeten Treiber 7 nicht beeinträchtigt. Die spaltregulierende Werkzeuglippe 1 arbeitet zugleich als Rückstellfeder. - Das in den Figuren dargestellte Werkzeug gehört einem Blaskopf für die Herstellung von Kunststofffolien an. Die Erfindung bezieht sich insbesondere auf ein solches Werkzeug. Dabei ist eine Mehrzahl von Stellstangen 3, die in bezug auf den als Ringspalt ausgeführten Austrittsspalt S radial verlaufen, über den Umfang des Austrittsspaltes S äquidistant verteilt, - und entsprechend sind die Treiber mit dem Stellmotor angeschlossen.

## Patentansprüche

1. Strangpreßwerkzeug für das Strangpressen von thermoplastifiziertem Kunststoff, - mit
zumindest einem Austrittsspalt (S) in einem Werkzeugkörper, der eine spaltregulierende Werkzeuglippe (1) und eine spaltbegrenzende Gegenlippe (2) aufweist,
wobei die spaltregulierende Werkzeuglippe (1) an zumindest eine axialverstellbare Stellstange (3) angeschlossen ist, welche einer Steuer- und Regeleinrichtung (4) für die Spaltweite und damit für die Dicke des stranggepreßten Kunststoffes angehört, wobei die Steuer- und Regeleinrichtung (4) einen umdrehungswinkelsteuerbaren Stellmotor (5) aufweist, der mit einem Untersetzungsgetriebe (6) ausgerüstet ist, **dadurch gekennzeichnet,** daß das Untersetzungsgetriebe (6) über einen Treiber (7) auf die Stellstange (3) arbeitet.

2. Strangpreßwerkzeug nach Anspruch 1, dadurch gekennzeichnet, daß das Aggregat aus Stellmotor (5), Untersetzungsgetriebe (6) und Treiber (7) als einheitliches Bauteil ausgeführt sowie im Bereich der Stellstange (3) in eine Bauteilaufnahme (8) in dem Strangpreßwerkzeug eingesetzt ist und in dieser durch zumindest eine Justierschraube (9) justierbar ist.

3. Strangpreßwerkzeug nach einem der Ansprüche 1 oder 2, dadurch gekennzeichnet, daß der Stellmotor (5) als Schrittmotor ausgeführt ist.

4. Strangpreßwerkzeug nach einem der Ansprüche 1 bis 3, dadurch gekennzeichnet, daß der Treiber (7) als Exzentertrieb ausgebildet ist.

5. Strangpreßwerkzeug nach Anspruch 4, dadurch gekennzeichnet, daß der Exzentertrieb eine Exzenterscheibe (10) aufweist, auf die ein Wälzlager (11) aufgesetzt ist.

6. Strangpreßwerkzeug nach einem der Ansprüche 1 bis 3, dadurch gekennzeichnet, daß der Treiber (7) als Linearkurventreiber ausgeführt ist.

7. Strangpreßwerkzeug nach einem der Ansprüche 1 bis 6, dadurch gekennzeichnet, daß die Stellstange (3) über eine Rückstellfeder den Treiber (7) beaufschlagt.

8. Strangpreßwerkzeug nach Anspruch 7, dadurch gekennzeichnet, daß die spaltregulierende Werkzeuglippe (1) zugleich als Rückstellfeder eingesetzt ist.

9. Strangpreßwerkzeug nach einem der Ansprüche 1 bis 8, dadurch gekennzeichnet, daß die spaltregulierende Werkzeuglippe (1) und die Gegenlippe (2) einer Breitschlitzdüse angehören.

10. Strangpreßwerkzeug nach einem der Ansprüche 1 bis 8, dadurch gekennzeichnet, daß die spaltregulierende Werkzeuglippe (1) und die Gegenlippe (2) einem Folienblaskopf angehören.

## Claims

1. An extrusion die for the extrusion of thermally plasticised synthetic material, - with
at least one outlet gap (S) in a die body, which comprises a gap-regulating die lip (1) and a gap-delimiting opposing lip (2),
wherein the gap-regulating die lip (1) is attached to at least one axially adjustable adjusting rod (3) which forms part of a control and adjustment device (4) for the gap width and thus for the thickness of the extruded synthetic material, wherein the control and adjustment device (4) comprises a servomotor (5) with a controllable angle of rotation which is equipped with a reducing gear (6), characterised in that the reducing gear (6) acts on the adjusting rod (3) via a driver (7).

2. An extrusion die according to claim 1, characterised in that the unit comprising the servomotor (5) reducing gear (6) and driver (7) is designed as a standardized component and is inserted in a component receiver (8) in the region of the adjusting rod (3) in the extrusion die and can be adjusted in the latter by at least one adjusting screw (9).

3. An extrusion die according to either one of claims 1 or 2, characterised in that the servomotor (5) is designed as a stepper motor.

4. An extrusion die according to any one of claims 1 to 3, characterised in that the driver (7) is constructed as an eccentric drive.

5. An extrusion die according to claim 4, characterised in that the eccentric drive has an eccentric disc (10) on which a rolling bearing (11) is placed.

6. An extrusion die according to any one of claims 1 to 3, characterised in that the driver (7) is designed as a linear cam disc driver.

7. An extrusion die according to any one of claims 1 to 6, characterised in that the adjusting rod (3) impinges on the driver (7) via a pull-back spring.

8. An extrusion die according to claim 7, characterised in that the gap-regulating die lip (1) is at the same time used as a pull-back spring.

9. An extrusion die according to any one of claims 1 to 8, characterised in that the gap-regulating die lip (1) and the opposing lip (2) form part of a sheet die.

10. An extrusion die according to any one of claims 1 to 8, characterised in that the gap-regulating die lip (1) and the opposing lip (2) form part of a film blowing head.

## Revendications

1. Filière d'extrusion pour l'extrusion de matières thermoplastiques, équipée d'au moins une fente de sortie (S) dans un corps de filière, qui présente une lèvre de filière (1) de régulation de fente et une contre-lèvre (2) de limitation de fente,
la lèvre de filière de régulation de fente (1) étant reliée à au moins une tige de réglage (3) déplaçable axialement, qui appartient à un dispositif de commande et de réglage (4) de la largeur de la fente et ainsi de l'épaisseur de la matière plastique extrudée, le dispositif de commande et de réglage (4) comportant un moteur de réglage (5) pouvant être commandé en angle de rotation, qui est équipé d'un mécanisme de réduction (6), caractérisée en ce que le mécanisme de réduction (6) agit par l'intermédiaire d'un organe d'entraînement (7) sur la tige de réglage (3).

2. Filière d'extrusion selon la revendication 1, caractérisée en ce que l'ensemble constitué du moteur de réglage (5), du mécanisme réducteur (6) et de l'organe d'entraînement (7) est réalisé sous la forme d'un bloc unitaire, est installé à proximité de la tige de réglage (3) dans un logement (8) dans la filière d'extrusion et est réglable dans celui-ci par au moins une vis de réglage (9).

3. Filière d'extrusion selon l'une des revendications 1 ou 2, caractérisée en ce que le moteur de réglage (5) est réalisé sous la forme d'un moteur pas à pas.

4. Filière d'extrusion selon l'une des revendications 1 à 3, caractérisée en ce que l'organe d'entraînement (7) est réalisé sous la forme d'un entraînement à excentrique.

5. Filière d'extrusion selon la revendication 4, caractérisée en ce que l'entraînement à excentrique présente un disque excentrique (10), sur lequel est placé un roulement (11).

6. Filière d'extrusion selon l'une des revendications 1 à 3, caractérisée en ce que l'organe d'entraînement (7) est réalisé sous la forme d'un mécanisme à cane linéaire.

7. Filière d'extrusion selon l'une des revendications 1 à 6, caractérisée en ce que la tige de réglage (3) sollicite, par l'intermédiaire d'un ressort de rappel, l'organe d'entraînement (7).

8. Filière d'extrusion selon la revendication 7, caractérisée en ce que la lèvre de filière (1) de régulation de fente est également utilisée en tant que ressort de rappel.

9. Filière d'extrusion selon l'une des revendications 1 à 8, caractérisée en ce que la lèvre de filière (1) de régulation de fente et la contre-lèvre (2) appartiennent à une filière plate.

10. Filière d'extrusion selon l'une des revendications 1 à 8, caractérisée en ce que la lèvre de filière (1) de régulation de fente et la contre-lèvre (2) appartiennent à une tête d'extrusion-soufflage de feuilles.
